# EUROPÄISCHE PATENTSCHRIFT

(11) **EP 0 817 804 B1**
(45) Veröffentlichungstag und Bekanntmachung des Hinweises auf die Patenterteilung: **11.10.2000**
(21) Anmeldenummer: 96905655.5
(22) Anmeldetag: 14.03.1996
(51) Int. Cl.: C08B 31/00, C08H 1/06

(54) **BIOLOGISCH ABBAUBARE ZUSAMMENSETZUNG**
BIODEGRADABLE COMPOSITION
COMPOSITION BIODEGRADABLE

(30) Priorität: 31.03.1995 CH 91895; 04.04.1995 CH 96595; 27.04.1995 CH 120095; 08.01.1996 CH 3996
(43) Veröffentlichungstag der Anmeldung: 14.01.1998
(73) Patentinhaber: NOVAMONT S.p.A., 28100 Novara (IT)
(72) Erfinder: Silbiger, Jakob, 4054 Basel (CH)
(74) Vertreter: Braun, André
(86) Internationale Anmeldenummer: CH9600098
(87) Internationale Veröffentlichungsnummer: WO9630414

(56) Entgegenhaltungen:
- DE-A- 2 552 126
- DE-A- 2 815 153
- US-A- 5 397 834

## Beschreibung

Die vorliegende Erfindung betrifft eine biologisch abbaubare Zusammensetzung, welche für die Herstellung von spritzgegossenen oder extrudierten Artikeln geeignet ist, insbesondere für die Herstellung von Wegwerf- und Verbrauchsartikeln, wie beispielsweise Kerzenbecher, Reklameartikel und dergleichen oder schüttfähiges geschäumtes Verpackungsmaterial. Die Erfindung betrifft auch solche spritzgegossene oder extrudierte Wegwerf- und Gebrauchsartikel, welche aus der erfindungsgemässen Zusammensetzung hergestellt sind. Die erfindungsgemässen spritzgegossenen oder extrudierten Artikel zeigen ausgezeichnete physikalische Eigenschaften und sind infolge der verwendeten erfindungsgemässen Zusammensetzung vorteilhaft herstellbar.

Wegwerf- und Verbrauchsartikel auf der Basis von biologisch abbaubaren Werkstoffen sind an sich bekannt. Im Vergleich zu den bekannten Materialien ergibt die im weiteren definierte Zusammensetzung auch Vorteile bei der Herstellung der erfindungsgemässen biologisch abbaubaren Artikel. Ein besonderer Vorteil der erfindungsgemässen Zusammensetzung besteht darin, dass deren Verarbeitungstemperatur gegebenenfalls auch niedrig gehalten werden kann, so dass bei der industriellen Herstellung entsprechend der angewandten Temperatur ein vergleichsweise erhöhter Durchsatz erreicht werden kann. Im weiteren haben Gegenstände, welche aus der erfindungsgemässen Zusammensetzung hergestellt sind, beispielsweise dünnwandige Kerzenbecher, den überraschenden Vorteil, dass sie beim Lagern und insbesondere beim Erwärmen (was beispielsweise beim Abbrennen einer Kerze der Fall ist) nicht milchig werden und unverändert durchscheinend bleiben.

Die DE-A-2552126 offenbart eine wasserlösliche essbare thermoplastische Formmasse, welche aus einem Stärkematerial, einem Alkalimetall- oder Erdalkalimetallsalz eines Proteinmaterials, einem Plastifizierungsmittel und einem Gleitmittel hergestellt ist. Bei dieser Salzbildung werden die im Protein vorhandenen freien Carboxylgruppen unter Verwendung der bis zur Salzbildung notwendigen äquivalenten Menge Alkali teilweise oder gänzlich neutralisiert. Eine weitergehende Behandlung mit Alkali ist zu vermeiden.

Die vorliegende Erfindung ist in den Patentansprüchen definiert. Insbesondere betrifft die Erfindung eine biologisch abbaubare Zusammensetzung, welche dadurch gekennzeichnet ist, dass diese aus einem Stärke/Protein-Reaktionsprodukt besteht, welches durch Reaktion einer Stärke mit einem bei mindestens p_{H} 8, unter entsprechender Deprotonierung der Aminogruppen, behandelten Protein erhalten wurde, und diese Zusammensetzung gegebenenfalls ein oder mehrere Stoffe ausgewählt aus der Gruppe umfassend Alkenolpolymere, Füllstoffe, Gleitmittel, Plastifizierungsmittel, synthetische thermoplastische Polymere, Stabilisatoren, Flammschutzmittel, Farbstoffe, Nukleierungsmittel, Verschäumungsmittel, Pigmente und deren Mischungen enthält; wobei das Gewichtsverhältnis des trockenen Proteins zur trockenen Stärke im Stärke/Protein-Reaktionsprodukt 0.05 : 99.95 bis 40 : 60, vorzugsweise 0.05 : 99,95 bis 25 : 75, vorzugsweise 0.05 : 99.95 bis 9.5 : 90.5 beträgt.

Insbesondere betrifft die vorliegende Erfindung eine biologisch abbaubare Zusammensetzung, welche durch Erhitzen und Schmelzen einer Ausgangsmischung zu einer Schmelze erhalten wurde, dadurch gekennzeichnet, dass die genannte Ausgangsmischung die folgenden Bestandteile enthält: (i) eine Stärke mit einem Wassergehalt von 5 Gew.-% bis 40 Gew.-%; (ii) ein bei mindestens p_{H} 8, unter entsprechender Deprotonierung der Aminogruppen, behandeltes Protein, und (iii) gegebenenfalls ein oder mehrere Stoffe ausgewählt aus der Gruppe umfassend Alkenolpolymere, Füllstoffe, Gleitmittel, Plastifizierungsmittel, synthetische thermoplastische Polymere, Stabilisatoren, Flammschutzmittel, Farbstoffe, Nukleirungsmittel, Verschäumungsmittel, Pigmente und deren Mischungen enthält; wobei das Gewichtsverhältnis des trockenen Proteins zur trockenen Stärke im Stärke/Protein-Reaktionsprodukt 0.05 : 99.95 bis 40 : 60, vorzugsweise 0.05 : 99,95 bis 25 : 75, vorzugsweise 0.05 : 99.95 bis 9.5 : 90.5 beträgt.

Die vorliegende Erfindung betrifft im weiteren eine Zusammensetzung, welche dadurch gekennzeichnet ist, dass diese die folgenden Bestandteile enthält: (i) eine Stärke mit einem Wassergehalt von 5 Gew.-% bis 40 Gew.-%; (ii) ein bei mindestens p_{H} 8, unter entsprechender Deprotonierung der Aminogruppen, behandeltes Protein, und (iii) gegebenenfalls ein oder mehrere Stoffe ausgewählt aus der Gruppe umfassend, Alkenolpolymere, Füllstoffe, Gleitmittel, Plastifizierungsmittel, synthetische thermoplastische Polymere, Stabilisatoren, Flammschutzmittel, Farbstoffe, Nukleirungsmittel, Verschäumungsmittel, Pigmente und deren Mischungen enthält; wobei das Gewichtsverhältnis des trockenen Proteins zur trockenen Stärke im Stärke/Protein-Reaktionsprodukt 0.05 : 99.95 bis 40 : 60, vorzugsweise 0.05 : 99,95 bis 25 : 75, vorzugsweise 0.05 : 99.95 bis 9.5 : 90.5 beträgt.

Das bei mindestens p_{H} 8, unter entsprechender Deprotonierung der Aminogruppen, behandelte Protein wird im weiteren Text auch als "deprotoniertes Protein" bezeichnet.

In diesem Sinne kann die Zusammensetzung als pulverige Mischung, als Granulat, beispielsweise hergestellt durch Extrusion in einem Extruder, als Schmelze oder als ein daraus hergestellter Gegenstand, beispielsweise als spritzgegosseneroder extrudierter Gegenstand, vorliegen.

Die hierin verwendete Stärke hat einen Wassergehalt von etwa 5 Gew.-% bis etwa 40 Gew.-%, vorzugsweise 6 Gew.-% bis 30 Gew.-%. Meist bevorzugt ist ein Wassergehalt von 10 Gew.-% bis 24 Gew.-%.

Der hierin verwendete Begriff "Stärke" bezieht sich auf pflanzliche Stärke, wie diese beispielsweise aus Kartoffeln, Weizen, Mais, Hafer; Reis oder andern Stärke enthaltenden Pflanzen gewonnen wird. Solche Stärke enthält vorwiegend Amylose und Amylopectin. Kartoffelstärke enthält in der Regel etwa 30 Gew.-% Amylose während gewisse Maissorten beispielsweise 75 Gew.-% oder mehr Amylose enthalten oder nahezu vollständig aus Amylopektin bestehen können. Die Zusammensetzungen der vorliegenden Erfindung können mit all diesen Stärkearten hergestellt werden. Bevorzugt sind Maisstärke und Kartoffelstärke, und insbesondere Kartoffelstärke, da diese gut verarbeitbar ist und praktisch keine oder nur wenig Eigenfarbe zeigt, so dass durchscheinende Artikel, beispielsweise Kerzenbecher, erhalten werden, welche im Zusammenhang mit Licht, z.B. dem Licht einer Kerze, besondere überraschende optische Effekte zeigen.

Der hierin verwendete Begriff "Stärke" umfasst ebenso, Stärkeester, vorzugsweise Stärkeacetate, insofern die Reaktionsfähigkeit des Stärke-Derivats nicht beeinträchtigt ist und mit dem deprotonierten Protein, d.i. der Komponente (ii), zu reagieren vermag, was in der Regel dann der Fall ist, wenn der Substitutionsgrad des Stärkederivats den Wert von 0.05 nicht übersteigt.

Das deprotonierte Protein der Komponente (ii) ist vorzugsweise deprotonierte pflanzliche oder tierische Gelatine oder deprotoniertes Kasein, jedoch sind alle kommerziell erhältlichen Proteine, verwendbar. Bevorzugt ist deprotonierte Gelatine. Proteine sind Polypeptide, welche Carboxylgruppen sowie Aminogruppen als Seitengruppen in demselben Molekül enthalten. Proteine sind deshalb amphoter und weisen einen sogenannten isoelektrischen Punkt auf, bei welchem die im Molekül vorhandenen negativen und positiven elektrischen Ladungen gleich gross sind. Für Gelatine beispielsweise, je nach der Art der Herstellung, ist dieser isoelektrische Punkt beim Säurewert (p_{H}) von etwa p_{H} 4.7 bis p_{H} 5.0. Für Gelatine gilt im weiteren, dass die vorhandenen Säuregruppen bei etwa p_{H} 1.5 bis p_{H} 6.5 neutralisiert werden, während die verschiedenen Aminogruppen im Bereich von etwa p_{H} 8 bis p_{H} 11.5 deprotoniert werden. Dies bedeutet, dass im Bereich von p_{H} 6.5 praktisch alle Carboxylgruppen neutralisiert sind. Wird der p_{H} erhöht, so beginnt ab p_{H} 8 die Deprotonierung bestimmter Aminogruppen, wobei bei p_{H} 11.5 die Deprotonierung aller Aminogruppen erreicht ist. Deprotoniertes Polypeptid enthält freie reaktionsfähige Elektronen, die sich mit der Stärke assoziieren und mit dieser reagieren können. Je höher der Deprotonierungsgrad, umso stärker kann das deprotonierte Protein mit der Stärke reagieren. Dabei wird die Stärke modifiziert. Der Erweichungspunkt des erhaltenen Reaktionsproduktes, im Vergleich mit nicht-modifizierter Stärke, ist niedriger, ebenso die Viskosität. Je höher der Deprotonierungsgrad des Proteins und/oder je mehr deprotoniertes Protein der Stärke zugesetzt wird, umso stärker wird die Stärke modifiziert und umso niedriger wird die mögliche Verarbeitungstemperatur der Stärke/Protein-Reaktionsproduktes. Die Zusammensetzung des Stärke/Protein-Reaktionsproduktes lässt sich, je nach den gewünschten Produkteigenschaften, optimieren.

Das deprotonierte Protein ist mit Bezug auf die im Protein enthaltenen Carboxylgruppen vorzugsweise ein Alkali- oder Erdalkalisalz, vorzugsweise ein Natrium- oder Kaliumsalz. Es wird in an sich bekannter Weise hergestellt durch Behandeln des Proteins mit dem entsprechenden Alkali in wässrigem Medium, beispielsweise mit Natriumhydroxid oder Kaliumhydroxid. Das deprotonierte Protein kann aber auch während des Extrusionsverfahrens in situ hergestellt werden durch Erhitzen eines Ausgangsgemisches bestehend aus den entsprechenden Mengen an Stärke, unverändertem (nicht-deprotoniertem) Protein und trockenem oder wässrigem Alkalihydroxid oder Erdalkalihydroxid. Ebenso kann die Reaktion zwischen Stärke und deprotoniertem Protein in situ im Extrusionsverfahren ausgeführt werden, indem man die Stärke zusammen mit unverändertem Protein zuerst in den Extruder einbringt und die entsprechende Menge an wässrigem Alkali anschliessend während der Extrusion dem extrudiertem Gemisch im Extruder zuführt. In beiden Fällen wird das Protein während des Erhitzens in situ deprotoniert und reagiert anschliessend mit der Stärke. Ein allfälliger Überschuss an Alkali kann in der erfindungsgemässen Zusammensetzung neutralisiert werden, vorzugsweise mit einer mehrbasischen Säure, wie z.B. Weinsäure oder Zitronensäure, so dass der p_{H}, der Zusammensetzung dann 7 oder weniger als 7 beträgt.

Vorzugsweise verwendet man in der Zusammensetzung ein deprotoniertes Protein, welches bei mindestens p_{H}, 10, und vorzugsweise bei etwa p_{H}, 11.5 deprotoniert wurde. Letzteres ist vollständig deprotoniert. Bevorzugt ist ein Gewichtsverhältnis des trockenen Proteins zur Stärke im Stärke/Protein-Reaktionsprodukt von 1:99 bis 20:80, vorzugsweise 1:99 bis 8.5:91.5, insbesondere bevorzugt ist ein Gewichtsverhältnis von 3:97 bis 5:95.

Die Komponenten (i) und (ii) zusammen sind in der gesamten Zusammensetzung mit einem Gewichtsanteil von mindestens 30 Gew.-%, vorzugsweise mindestens 40 % und vorzugsweise von mindestens 50% anwesend, berechnet auf das Gesamtgewicht der Trockensubstanz dieser beiden Komponenten.

Die Trockensubstanz aller unter Komponente (iii) genannten Additive in der Zusammensetzung beträgt 0.2 Gew.-% bis 80 Gew.-%, vorzugsweise 0.2 Gew.-% bis 50 Gew.-%, vorzugsweise 0.5 Gew.-% bis 20 Gew.-%, oder auch 0.5 Gew.-% bis 10 Gew.-%, bezogen auf das Gesamtgewicht der Zusammensetzung.

Alkenolpolymere der Komponente (iii) im Sinne der vorliegenden Erfindung sind partiell hydrolysierte Polyvinylacetate mit einem Hydrolysierungsgrad von 65 Mol% bis 100 Mol%. Diese Polymere sind als Polyvinylalkohole bekannt und sind je nach dem Hydrolysierungsgrad wasserlöslich. Wasserlösliche Polyvinylalkohole sind in der Regel in ihrer reinen Form nicht mehr thermoplastisch und werden mit Zusätzen von an sich bekannten Plastifizierungsmitteln verarbeitet. Polyvinylalkohole der Komponente (iii) mit einem Hydrolysierungsgrad von 75-99 Mol%, vorzugsweise 87-98 Mol%, insbesondere 75-89 Mol% oder 96-99 Mol% und einem Molekulargewicht von etwa 15'000 bis 240'000, vorzugsweise 15'000 bis 180'000, vorzugsweise 40'000 bis 110'000, vorzugsweise 40'000 bis 80'000, sind infolge ihrer biologischen Abbaubarkeit bevorzugt. Alkenolpolymere verwendet man vorzugsweise in einer Konzentration von 5-40 Gew.-%, vorzugsweise von 5 bis 35% und vorzugsweise von 10-25 Gew.-%, bezogen auf das Gesamtgewicht der Zusammensetzung.

Füllstoffe sind beispielsweise Magnesiumoxid, Siliziumoxid oder Aluminiumoxid, wobei diese vorzugsweise in einem Gewichtsanteil von 3-25 Gew.-%, vorzugsweise 3-20 Gew.-% vorzugsweise 3-12 Gew.-%, bezogen auf das Gesamtgewicht der Mischung, anwesend sind. Diese Füllstoffe haben auch eine flammhemmende Wirkung, so dass beispielsweise für Kerzenbecher ein erhöhter Zusatz oft angezeigt ist, was wiederum den nötigen Zusatz an chemisch weniger inerten Flammschutzmitteln vermindert.

Gleitmittel sind beispielsweise Aluminiumstearat, Magnesiumstearat, Lecithine oder Mono- oder Diglyceride, welche vorzugsweise in einer Konzentration von 0.5 bis 4 Gew.-%, vorzugsweise 0.7 bis 1.5 Gew.-%, anwesend sind.

Plastifizierungsmittel sind beispielsweise Polyalkylenoxide, vorzugsweise niedermolekulare Polyäthylenglykole oder Polypropylenglykole, Äthylenglykol, Propylenglykol, Sorbitol, Glycerin, Glycerinmono-, di- oder triacetat, Harnstoff, Pentaerithrit, Triäthylcitrat, Tributylcitrat, sowie weitere an sich bekannte Plastifizierungsmittel, welche in einer Konzentration von vorzugsweise 0.5 bis 25 Gew.-%, vorzugsweise 1.0 bis 15 Gew.-% oder auch 1.0 bis 10 Gew.-%, bezogen auf das Gewicht aller Komponenten, zugesetzt werden.

Synthetische thermoplastische Polymere sind vorzugsweise ausgewählt aus der Gruppe der Polyolefine, vorzugsweise Polyäthylen oder Polypropylen; Polyvinylacetate und partiell hydrolysierte Polyvinylacetate; Polystyrol; Polyacrylsäureester; Polymethacrylsäureester; thermoplastische Polykondensate, vorzugsweise Polyester und Polyamide; Alkylen/Acrylsäure-Copolymere oder Alkylen/Methacrylsäure-Copolymere, vorzugsweise Äthylen/Acrylsäure-Copolymere; Alkylen/Maleinanhydrid-Copolymere; Alkylen/Vinylalkohol-Copolymere.

Bevorzugt sind biologisch relativ schnell abbaubare Polyester wie beispielsweise Polylactone, vorzugsweise Polycaprolacton. Andere an sich bekannte kommerziell erhältliche Polyester oder Polyamide können, insbesondere infolge der grossen exponierten Oberfläche der Polymere während des Abbaus, ebenso für den erfindungsgemässen Zweck verwendet werden. Die Zeit bis zum vollständigen biologischen Abbau dauert allerdings in der Regel länger, verglichen mit Polycaprolacton. Bevorzugte Copolymere sind Äthylen/Acrylsäure-Copolymere in welchen die Carboxylgruppen teilweise in Salzform, vorzugsweise als Alkalisalz, vorliegen können. Von den Alkylen/Vinylalkohol-Copolymeren sind die Äthylen/Vinylalkohol-Copolymere bevorzugt, vorzugsweise solche mit einem Vinylalkoholanteil von mindestens 50 Mol%, vorzugsweise mindestens 58 Mol%. Meist bevorzugt ist ein Vinylalkoholanteil von 65 Mol% bis 85 Mol%.

Bevorzugt sind solche synthetische Polymere mit einem Erweichungspunkt von 260'C oder niedriger, vorzugsweise von 240°C oder niedriger und besonders bevorzugt mit 110°C bis 210°C oder niedriger. Polycaprolactone können schon bei 60°C verarbeitet werden, so dass die untere Temperaturgrenze der Polymere bei etwa 60°C liegt.

Die vorgenannten thermoplastischen Polymere und Copolymere sind vorzugsweise wasserunlöslich, das heisst, sie lösen sich zu weniger als 2 Gewichtsprozent, vorzugsweise weniger als 1 Gewichtsprozent, in Wasser bei Raumtemperatur (20°C).

Vorzugsweise verwendet man diese Polymere in einer gesamten Konzentration von 0.2 Gew.-% bis 40 Gew.-%, vorzugsweise 0.5 Gew.-% bis 30 Gew.-%, vorzugsweise 0.5 Gew.-% bis 20 Gew.-%, oder auch 0.5 Gew.-% bis 10 Gew.-%, vorzugsweise 1 Gew.-% bis 5 Gew.-% bezogen auf das Gesamtgewicht der Zusammensetzung. Bevorzugt sind Polycaprolacton, Äthylen/Acrylsäure Copolymere und Äthylen/Vinylalkohol Copolymere.

Stabilisatoren sind beispielsweise an sich bekannte Antioxydantien, UV-Absorber oder UV-Quencher oder Bakterizide oder Fungizide und werden in an sich bekannten Mengen verwendet.

Flammschutzmittel sind beispielsweise Phosphor, Schwefel oder Halogen enthaltende Verbindungen, oder Mischungen derselben. Solche Flammschutzmittel sind an sich bekannt. Diese Flammschutzmittel sind vorzugsweise anwesend in Mengen von 0.1 bis 10 Gew.-%, vorzugsweise von 1 to 6 Gew.-%, und meist bevorzugt von 2 to 4 Gew.-%, bezogen auf das Gesamtgewicht der Zusammensetzung. Meist bevorzugte Flammschutzmittel sind Guanidin-phosphat, Ammonium-polyphosphat, Äthylendiamin-polyphosphat (gegebenenfalls zusammen mit Dinatrium-orthophosphat), Guanidin-sulphat und/oder Ammonium-sulphat. Diese werden in den angegebenen Mengen eingesetzt. Geeignete Flammschutzmittel für die erfindungsgemässe Zusammensetzung sind im weiteren auch Aluminium-trihydrat; Aluminium-acetylacetonat; Aluminium-acetat; Natrium-Aluminium-hydroxy-carbonat; Magnesium-Aluminium-hydroxy-carbonat;Magnesium-hydroxid;Zink-borat; Ammonium-pentaborat; Borsäure; Wasserglas und Natrium-tetraborat. Diese genannten Flammschutzmittel verwendet man vorzugsweise in Mengen von 1 bis 15 Gew.-%, vorzugsweise in Mengen von 3 bis 10 Gew.-%.

Als Farbstoffe werden vorzugsweise an sich bekannte bioabbaubare Farbstoffe in an sich bekannter Menge eingesetzt. Nukleirungsmittel sind beispielsweise die genannten Füllstoffe oder Magnesiumsilikat (micro talcum) mit einer Teilchengrösse von ca. 0.1 bis 5 Mikron. Diese sind vorzugsweise in einer Konzentration von 0.1 bis 3 Gew.-%, vorzugsweise 0.1 bis 0.5 Gew.-% anwesend.

Verschäumungsmittel sind an sich bekannt, wie zum Beispiel eine Kombination von Natriumbikarbonatmit Zitronensäure und ähnliche kommerziell erhältliche Verschäumungsmittel. Es ist auch möglich gasförmiges Kohlendioxid direkt der im Extruder geschmolzenen Zusammensetzung zuzusetzen. Das Verschäumungsmittel setzt man vorzugsweise in einer Konzentration von 0.1 bis 0.2 Gew.-% zu.

Die vorliegende Erfindung betrifft somit auch eine biologisch abbaubare Zusammensetzung, welche dadurch gekennzeichnet ist, dass diese aus einem Stärke/Protein-Reaktionsprodukt besteht, welches durch Reaktion einer Stärke mit deprotoniertem Protein erhältlich ist, wobei das Gewichtsverhältnis des trockenen Proteins zur trockenen Stärke im Stärke/Protein-Reaktionsprodukt 0.05:99.95 bis 40:60, vorzugsweise 0.05 : 99,95 bis 25 : 75, vorzugsweise 0.05 : 99.95 bis 9.5 : 90.5 beträgt und die Zusammensetzung mindestens ein synthetisches thermoplastisches Polymer enthält, welches ausgewählt ist aus der Gruppe der Polyolefine, vorzugsweise Polyäthylen oder Polypropylen; Polyvinylacetate und partiell hydrolysierte Polyvinylacetate; Polystyrol; Polyacrylsäureester;Polymethacrylsäureester;thermoplastische Polykondensate, vorzugsweise Polyester und Polyamide; Alkylen/Acrylsäure-Copolymere oder Alkylen/Methacrylsäure-Copolymere, vorzugsweise Äthylen/Acrylsäure-Copolymere;Alkylen/Maleinanhydrid-Copolymere;Alkylene/Vinylalkohol-Copolymere und gegebenenfalls ein oder mehrere Stoffe ausgewählt aus der Gruppe umfassend Alkenolpolymere, Füllstoffe, Gleitmittel, Plastifizierungsmittel, Stabilisatoren, Flammschutzmittel, Farbstoffe, Nukleirungsmittel, Verschäumungsmittel, Pigmente und deren Mischungen enthält.

Die erfindungsgemässe Zusammensetzung kann grundsätzlich wie herkömmliche thermoplastische Materialien gemäss den herkömmlichen Verfahren verarbeitet werden, unter Verwendung beispielsweise einer herkömmlichen Vorrichtung, welche geeignet ist für Spritzgiessen, Blasformen, Extrudieren und Coextrudieren (Stab-, Rohr- und Filmextrudieren) oder Pressformen, um an sich bekannte Gegenstände herzustellen. Diese Artikel umfassen beispielsweise Flaschen, Folien, Filme, Verpackungsmaterialien, Rohre, Stäbe, laminierte Filme, Säcke, Beutel, Becher, pharmazeutische Kapseln, Granulate oder Pulver.Bevorzugt werden mit der erfindungsgemässen Zusammensetzung spritzgegossene Artikel wie Kerzenbecher oder extrudierte Artikel wie geschäumte Verpackungsmaterialien hergestellt. Kerzenbecher, welche vorzugsweise ein Flammschutzmittel enthalten, werden vorzugsweise gemäss den oben angegebenen Bedingungen durch Spritzgiessen hergestellt.

Für die Herstellung der erfindungsgemässen Zusammensetzung werden die Ausgangsmaterialien der Komponenten (i) und (ii) in einem Mischer gemischt und durch Erwärmen, beispielsweise in einem Extruder zur Reaktion gebracht. Anschliessend kann das, beispielsweise als Granulat, erhaltene Reaktionsprodukt mit den gegebenenfalls anwesenden Verbindungen der Komponente (iii), vorzugsweise in einem Mischer, vorgemischt und anschliessend in einem Extruder oder einer Spritzgussmaschine verarbeitet werden. Für die Herstellung der erfindungsgemässen Zusammensetzung können aber auch die Ausgangsmaterialien der Komponenten (i), (ii) und gegebenenfalls (iii) vorzugsweise in einem Mischer vorgemischt und anschliessend in die Zuführeinrichtung eines Extruders gegeben werden. Ebenso kann die Zusammensetzung mit dem Stärke/Protein-Reaktionsprodukt in situ hergestellt werden, wie dies bereits oben beschrieben ist. Der dazu verwendete Extruder kann ein Einschneckenextruder oder Zweischneckenextruder sein. Dabei ist im Verarbeitungsverfahren der Wassergehalt der Ausgangsmischung anfänglich vorzugsweise etwa 30-40 Gew.-% bezogen auf das Gewicht der gesamten Mischung, wobei der Wassergehalt im Verfahren, und jedenfalls kurz bevor die geschmolzene Mischung aus dem Extruder austritt, auf ca. 20-24 Gew.-% gesenkt wird. Der Wassergehalt der Ausgangsmischung kann aber auch niedriger sein. Die während der Extrusion verwendeten Drucke entsprechen den in der Extrusionstechnik üblicherweise verwendeten Drucke. Der Mindestdruck ist mindestens so hoch wie der Wasserdampfdruck bei der verwendeten Verfahrenstemperatur, so dass im Extruder selbst keine Verdampfung des Wassers auftritt. Üblicherweise verwendete Drucke im Extruder liegen bei 5 bis 50 x 10⁵ N/m². Die Verfahrenstemperatur liegt segmentabhängig anfänglich bei Raumtemperatur, wobei die Mischung dann im Extruder auf Temperaturen im Bereich von 100°C bis 220°C, vorzugsweise im Bereich von 130°C bis 160°C, erhitzt wird, wobei die Zusammensetzung in eine Schmelze übergeht. Die heisse und unter Überdruck stehende Schmelze tritt nun beispielsweise durch eine Düse oder mehrere Düsen, welche sich am Kopfende des Extruders befinden, aus dem Extruder, wobei man beispielsweise in an sich bekannter Weise ein Granulat oder einen Schaum herstellt. Analogerweise wird die Zusammensetzung in an sich bekannter Weise in einer Spritzgussmaschine verarbeitet. Stellt man beispielsweise einen Schaum mittels Extrusion her, so erhält man diesen in an sich bekannter Weise dadurch, dass das Wasser als Folge der Druckentspannung teilweise verdampft und das gegebenenfalls vorhandene zusätzliche Verschäumungsmittel expandiert, so dass die Schmelze verschäumt und sich anschliessend zu einem Schaum verfestigt. Dabei wird die aus dem Extruder austretende Schmelze vorzugsweise sofort nach dem Austritt durch eine Schneideeinrichtung in kleine Segmente geschnitten, welche in der Folge zu schüttfähigem Verpackungsmaterial expandieren.

Geschäumte Verpackungsmaterialien auf der Basis von Stärke sind bekannt. Schüttfähige geschäumte Verpackungsmaterialien werden heute aus verschiedenen Materialien und in unterschiedlichsten Formen hergestellt. Im Vergleich zu den bekannten Verfahren ergibt die erfindungsgemässe Zusammensetzung bei der Herstellung des erfindungsgemässen biologisch abbaubaren geschäumten Verpackungsmaterials die eingangs bereits genannten Vorteile. Als Folge der möglichen niedrigen Verarbeitungstemperatur kann im weiteren dem Ausgangsprodukt ein Verschäumungsmittel zugesetzt und ein Granulat hergestellt werden, welches dieses Verschäumungsmittel in weitgehend unveränderter Form enthält, so dass das Granulat erst in einer zweiten Stufe verschäumt werden kann. Mittels des zweistufigen Verschäumens können dann aus dem Granulat nicht nur kleinstückige schüttbare Teile sondern auch grössere und kompakte Formen hergestellt werden.

In diesem Sinne betrifft die vorliegende Erfindung auch ein geschäumtes Verpackungsmaterial, welches durch Erhitzen und Schmelzen der erfindungsgemässen Zusammensetzung und anschliessendem verschäumen der Schmelze erhalten wurde. Die vorliegende Erfindung betrifft im weiteren ein verschäumbares Granulat, welches dadurch gekennzeichnet ist, dass dieses aus einer erfindungsgemässen Stärke/Protein Zusammensetzung besteht.

In diesem Sinne kann man in einem ersten Schritt ein Granulat herstellen, welches alle notwendigen Komponenten der Zusammensetzung enthält und welches in einem zweiten Schritt expandiert werden kann. Für dieses Verfahren können die oben angegebenen Methoden verwendet werden. In einer Verfahrensvariante werden beispielsweise die Ausgangsmaterialien der Komponenten (i), (ii) und (iii) in einem Mischer vorgemischt und anschliessend in einem Extruder verarbeitet. Dabei ist im Verarbeitungsverfahren der Wassergehalt der Ausgangsmischung anfänglich vorzugsweise etwa 30 - 40 Gew.-% bezogen auf das Gewicht der gesamten Mischung, wobei der Wassergehalt im Verfahren, und jedenfalls kurz bevor die geschmolzene Mischung aus dem Extruder austritt, auf ca. 20-30 Gew.-% gesenkt wird. Der Wassergehalt der Ausgangsmischung kann aber auch niedriger sein. Die während der Extrusion verwendeten Drucke wurden oben beschrieben. Vor dem Austritt aus der Düse wird die Temperatur vorzugsweise auf unter 110°C, vorzugsweise auf unter 100°C, gesenkt. Die-heisse und unter Überdruck stehende Schmelze tritt nun durch eine Düse oder mehrere Düsen, welche sich am Kopfende des Extruders befinden, aus dem Extruder. Durch die Druckentspannung verdampft infolge der relativ niederen Temperatur nur ein kleiner Teil des vorhandenen Wassers, wobei ebenso das gegebenenfalls vorhandene zusätzliche Verschäumungsmittel infolge der niedrigen Verfahrenstemperatur nicht expandiert, bzw. sich kein oder nur wenig Kohlendioxid entwickelt. Die aus dem Extruder austretende Schmelze kann mit einer Schneideeinrichtung in ein Granulat geschnitten werden. Dieses Granulat kann nun gegebenenfalls verpackt, verschickt und dann in einer zweiten Stufe mittels eines Extruders oder einer andern geeigneten Einrichtung zu grösseren kompakteren Formen oder zu schüttbarem Verpackungsmaterial verschäumt werden. Beträgt die Temperatur am Ausgang des Extruders 120°C oder mehr, so entsteht direkt ein geschäumtes Produkt.

### Beispiel 1

In einem Mischer werden jeweils (a) 2 kg, (b) 5 kg und (c) 10 kg handelsübliche Gelatine (150 bloom, isoelektrischer Punkt bei p_{H} 4.9) in (a) 28, resp. (b) 37, resp. (c) 40 Liter Wasser, gegebenenfalls unter leichtem Erwärmen, gerührt. Die erhaltene Mischung wird mit Natriumhydroxid auf einen Säurewert (p_{H}) von 11.5 eingestellt, wobei eine deprotonierte Gelatine erhalten wird. Die derart erhaltenen Gelatine wird nun mit 70 kg Maisstärke mit einem Wassergehalt von 16 Gew.-%, sowie mit 1 kg Natriumstearat und 1.2 kg Polyäthylenglykol (durchschnittliche Molekulargewicht ca. 1500) vermischt. Die erhaltene granulierte Zusammensetzung wird anschliessend in einem Extruder auf 160°C erhitzt, wobei die durchschnittliche Verweilzeit je nach der Drehzahl der Schnecke, deren Form und dem angewendeten Druck zwischen 40 und 70 Sekunden liegt. Durch das Entfernen von Wasser aus der geschmolzenen Mischung beträgt der Wassergehalt vor der Austrittsdüse des Extruders noch 22 Gew.-% und die Temperatur 115°C. Die Austrittsdüse am Ende des Extruders hat einen Durchmesser von 2.5 mm. Der extrudierte Strang wird direkt am Düsenaustritt mit einem rotierenden Messer abgeschnitten und gekühlt. Das erhaltene Granulat wird weiter zu Kerzenbechern sowie auch zu anderen Spritzgussartikeln oder zu extrudierten Artikeln in an sich bekannter Weise verarbeitet.

### Beispiel 2

In einem Mischer werden 12 kg handelsübliche Gelatine (150 bloom, isoelektrischer Punkt bei p_{H}, 4.9), 70 kg Maisstärke mit einem Wassergehalt von 16 Gew.-% vermischt. Die erhaltene Zusammensetzung wird nun in einem Extruder auf 160°C erhitzt, wobei die durchschnittliche Verweilzeit je nach der Drehzahl der Schnecke, deren Form und dem angewendeten Druck zwischen 40 und 70 Sekunden liegt. Im zweiten Segment nach der Zugabevorrichtung wird der Zusammensetzung im Extruder eine wässrige Natriumhydroxidlösung zugeführt, mit der Massgabe, dass der Säurewert der Mischung in Abhängigkeit des Materialdurchsatzes einen p_{H}-Wert von 11.5 erreicht und der Wassergehalt 30 Gew.-% beträgt. Durch das Entfernen von Wasser aus der Mischung kurz vor der Austrittsdüse beträgt der Wassergehalt vor der Austrittsdüse noch 21 Gew.-% und die Temperatur von 115°C. Man erhält ein Granulat, welches weiter zu spritzgegossenen Kerzenbechern in an sich bekannter Weise verarbeitet wird.

Unter dem Begriff "Kerzenbecher" gemäss der vorliegenden Erfindung sind alle Arten der bekannten Kerzenbecher zu verstehen, wie zum Beispiel Teelichthüllen, Opferlichthüllen und Kerzenbecher für grössere Kerzen, mit einer Brenndauer von bis zu einigen Tagen, wie beispielsweise Grabkerzen. Für Teelichte, welche in der Regel einige Stunden (etwa 4 Stunden) brennen, werden neben Glasbehältern, praktisch nur Hüllen aus Aluminium verwendet. Auch für grössere Kerzen, welche zum Beispiel etwa 24 Stunden und mehr brennen, werden zum Teil metallische Behälter verwendet. Es hat sich nun überraschenderweise gezeigt, dass Kerzen gleicher Grösse, beispielsweise Teelichte, in Bechern (Hüllen), welche aus einer erfindungsgemässen Zusammensetzung hergestellt sind, länger brennen als in Aluminiumbechern. Dieser überraschende Effekt bewirkt einen verminderten Wachsverbrauch bei gleicher Brenndauer und ist somit auch für den Schutz der Umwelt von Bedeutung. Als weitere überraschende Eigenschaft hat sich gezeigt, dass es ohne weiteres möglich ist, eine brennende Teelichtkerze in einem Teelichtbecher der vorliegenden Erfindung mit der Hand zu berühren und zu bewegen, während dies infolge der hohen Temperatur einer metallischen Teelichthülle nicht möglich ist.

### Beispiel 3

50 kg des erhaltenen Granulats, je erhalten gemäss Beispiel 1 und Beispiel 2, werden mit 12.5 kg mit vorplastifiziertem Polyvinylalkohol (Versuch 3a:) mit einem durchschnittlichem Molekulargewichtvon etwa 60'000 und einem Hydrolysierungsgrad von etwa 87-89 Mol% und (Versuch 3b:) mit einem durchschnittlichen Molekulargewicht von 108'000 und einem Hydrolysierungsgrad von 98-99 Mol%, sowie jeweils mit 1 kg Glycerin gemischt. Der Wassergehalt wird auf 25 Gew.-%, bezogen auf das Gesamtgewicht der Mischung eingestellt. Diese Mischung wird in einem Extruder (co-rotierender Zweischneckenextruder) auf 150° C erhitzt bei einer mittleren Verweilzeit von 110 Sekunden und einem Mindestdruck, der die Bildung von Wasserdampf im Extruder verhindert. Vor dem Austritt der geschmolzenen Zusammensetzung aus dem Extruder wird der Wassergehalt auf 21 Gew.-% und die Temperatur auf 120°C eingestellt. Die austretende Schmelze wird mit einem rotierenden Messer granuliert. Das erhaltene Granulat kann nun in einem weiteren Schritt zu geformten Gegenständen, beispielsweise Kerzenbecher in an sich bekannter Weise im Spritzguss verarbeitet oder zu Schäumen, gegebenenfalls unter Zumischung eines Verschäumungsmittels, in an sich bekannter Weise verschäumt werden. Für die Herstellung von Kerzenbechern wird das in diesem Beispiel 1, Teil b) erhaltene Granulat vorzugsweise noch mit einem Flammschutzmittel in einer Menge von etwa 2-3 Gew.-%, bezogen auf das Gesamtgewicht der Mischung, vermischt. Man erhält Kerzenbecher von ausgezeichneter Qualität.

### Beispiel 4

Die folgenden Zusammensetzungen werden analog zu den Beispielen 1, 2 und 3 hergestellt und zu Kerzenbecher weiter verarbeitet:

**Tabelle 1**

| Beispiel Nr. | deprot. Gelatine | Stärke | PVOH | Polymer |
|---|---|---|---|---|
| 4a | 1.5% | 75.5% | -.- | -.- |
| 4b | 4.0% | 73.0% | -.- | -.- |
| 4c | 9.5% | 69.0% | -.- | -.- |
| 4d | 15% | 45% | 17% | -.- |
| 4e | 15% | 62% | -.- | -.- |
| 4f | 5% | 61.5% | 8% | EVOH, 2.5% |
| 4g | 8.5% | 47.5% | 6% | PCL, 16% |
| 4h | 6% | 41.5% | 30% | -.- |
| 4i | 20% | 39% | 14% | EVOH, 5% |
| deprot. Gelatine = deprotonierte Gelatine | | | | |
| Stärke: gerechnet als Trockensubstanz | | | | |
| PCL = Polycaprolacton | | | | |
| EAA = Äthylen/Acrylsäure-Copolymer, Acrylsäuregehalt von 10 Mol% | | | | |
| PVOH = Polyvinylalkohol, Molekulargewicht (MG) (i) ca. 90'000, 87 Mol% | | | | |
| Hydrolysegrad (HG) und (ii) MG ca. 108'000, HG 98-99 Mol% | | | | |
| EVOH = Äthylen/Vinylalkohol-Copolymer, Äthylengehalt: 28 Mol% | | | | |
| gesamte Mischung = 100% | | | | |
| Wasser: 22.5% | | | | |
| Rest: Schmiermittel und Fliessmittel (Lezithin 0.5%; und Na-Stearat) | | | | |

### Beispiel 5

Die folgenden Zusammensetzungen werden analog zu den Beispielen 1, 2 und 3 hergestellt und mittels Spritzguss zu spritzgegossenen Kerzenbechern oder mittels Extrusion zu extrudierten Formen verarbeitet:

**Tabelle 2**

| Beispiel Nr. | deprot. Gelatine | Stärke | Polymer | Polymer |
|---|---|---|---|---|
| 5a | 1.5% | 60.5% | PCL, 14% | -.- |
| 5b | 6% | 36.5% | -.- | PVOH,35% |
| 5c | 25% | 52.0% | -.- | -.- |
| 5d | 4% | 51.5% | EVOH, 4.5% | PVOH, 17% |
| 5e | 20% | 39% | -.- | PVOH, 18% |
| 5f | 2.5% | 41.5% | EAA, 2.0% | PVOH, 32% |
| deprot. Gelatine = deprotonierte Gelatine | | | | |
| PCL = Polycaprolacton | | | | |
| EAA = Äthylen/Acrylsäure-Copolymer, Acrylsäuregehalt von 10 Mol% | | | | |
| PVOH = Polyvinylalkohol, (i) Molekulargewicht (MG) ca. 90'000, 87 Mol% Hydrolysegrad (HG) und (ii) MG ca. 108'000, HG 98-99 Mol% | | | | |
| EVOH = Äthylen/Vinylalkohol-Copolymer, Äthylengehalt: 28 Mol% | | | | |
| gesamte Mischung = 100% | | | | |
| Wasser: 22.5% | | | | |
| Rest: Schmiermittel und Fliessmittel (Lezithin 0.5%; und Na-Stearat) | | | | |

## Patentansprüche

1. Biologisch abbaubare Zusammensetzung, dadurch gekennzeichnet, dass diese aus einem Stärke/Protein-Reaktionsprodukt besteht, welches durch Reaktion einer Stärke mit einem bei mindestens p_{H}, 8, unter entsprechender Deprotonierung der Aminogruppen, behandelten Protein erhalten wurde, und diese Zusammensetzung gegebenenfalls ein oder mehrere Stoffe ausgewählt aus der Gruppe umfassend Alkenolpolymere, Füllstoffe, Gleitmittel, Plastifizierungsmittel, synthetische thermoplastische Polymere, Stabilisatoren, Flammschutzmittel, Farbstoffe, Nukleirungsmittel, Verschäumungsmittel, Pigmente und deren Mischungen enthält; wobei das Gewichtsverhältnis des trockenen Proteins zur trockenen Stärke im Stärke/Protein-Reaktionsprodukt 0.05 : 99.95 bis 40 : 60 beträgt.

2. Biologisch abbaubare Zusammensetzung nach Anspruch 1, welche durch Erhitzen und Schmelzen einer Ausgangsmischung zu einer Schmelze erhalten wurde, dadurch gekennzeichnet, dass die genannte Ausgangsmischung die folgenden Bestandteile enthält: (i) eine Stärke mit einem Wassergehalt von 5 Gew.-% bis 40 Gew.-%; (ii) ein bei mindestens p_{H} 8, unter entsprechender Deprotonierung der Aminogruppen, behandeltes Protein, und (iii) gegebenenfalls ein oder mehrere Stoffe ausgewählt aus der Gruppe umfassend Alkenolpolymere, Füllstoffe, Gleitmittel, Plastifizierungsmittel, synthetische thermoplastische Polymere, Stabilisatoren, Flammschutzmittel. Farbstoffe, Nukleirungsmittel, Verschäumungsmittel, Pigmente und deren Mischungen enthält; wobei das Gewichtsverhältnis des trockenen Proteins zur trockenen Stärke im Stärke/Protein-Reaktionsprodukt 0.05 : 99.95 bis 40:60 beträgt.

3. Biologisch abbaubare Zusammensetzung, dadurch gekennzeichnet, dass diese die folgenden Bestandteile enthält: (i) eine Stärke mit einem Wassergehalt von 5 Gew.-% bis 40 Gew.-%; (ii) ein bei mindestens p_{H} 8, unter entsprechender Deprotonierung der Aminogruppen, behandeltes Protein, und (iii) gegebenenfalls ein oder mehrere Stoffe ausgewählt aus der Gruppe umfassend, Alkenolpolymere, Füllstoffe, Gleitmittel, Plastifizierungsmittel, synthetische thermoplastische Polymere, Stabilisatoren, Flammschutzmittel, Farbstoffe, Nukleirungsmittel, Verschäumungsmittel, Pigmente und deren Mischungen enthält; wobei das Gewichtsverhältnis des trockenen Proteins zur trockenen Stärke im Stärke/Protein-Reaktionsprodukt 0.05 : 99.95 bis 40 : 60 beträgt.

4. Zusammensetzung nach einem der Ansprüche 1 bis 3, dadurch gekennzeichnet, dass diese Zusammensetzung als pulverige Mischung, als Granulat, als Schmelze oder als ein daraus hergestellter spritzgegossener oder extrudierter Gegenstand, vorliegt.

5. Zusammensetzung nach einem der Ansprüche 1 bis 4, dadurch gekennzeichnet, dass das unter Deprotonierung der Aminogruppen behandelte Protein der Komponente (ii) eine pflanzliche oder tierische Gelatine oder Kasein darstellt und bei mindestens p_{H} 10 deprotoniert wurde.

6. Zusammensetzung nach Anspruch 5, dadurch gekennzeichnet, dass das Protein der Komponente (ii) bei etwa p_{H}, 11.5 deprotoniert wurde.

7. Zusammensetzung nach einem der Ansprüche 1 bis 6, dadurch gekennzeichnet, dass das unter Deprotonierung der Aminogruppen behandelte Protein der Komponente (ii) Gelatine darstellt.

8. Zusammensetzung nach einem der Ansprüche 1 bis 7, dadurch gekennzeichnet, dass die Stärke eine pflanzliche Stärke darstellt, welche aus Kartoffeln, Weizen, Mais, Hafer, Reis oder andern Stärke enthaltenden Pflanzen gewonnen wurde.

9. Zusammensetzung nach einem der Ansprüche 1 bis 8, dadurch gekennzeichnet, dass die Stärke einen Stärkeester, vorzugsweise ein Stärkeacetat, darstellt, mit einem Substitutionsgrad der den Wert von 0.05 nicht übersteigt.

10. Zusammensetzung nach einem der Ansprüche 1 bis 9, dadurch gekennzeichnet, dass das Gewichtsverhältnis des trockenen Proteins zur Stärke im Stärke/Protein-Reaktionsprodukt von 1 : 99 bis 20 : 80 beträgt.

11. Zusammensetzung nach einem der Ansprüche 1 bis 10, dadurch gekennzeichnet, dass das Gewichtsverhältnis des trockenen Proteins zur Stärke im Stärke/Protein-Reaktionsprodukt von 1 : 99 bis 8.5 : 91.5 beträgt.

12. Zusammensetzung nach einem der Ansprüche 1 bis 11, dadurch gekennzeichnet, dass das Alkenolpolymere der Komponente (iii) ein partiell hydrolysiertes Polyvinylacetat mit einem Hydrolysierungsgrad von 65-100 Mol% darstellt.

13. Zusammensetzung nach einem der Ansprüche 1 bis 11, dadurch gekennzeichnet, dass das Alkenolpolymere der Komponente (iii) ein partiell hydrolysiertes Polyvinylacetat mit einem Hydrolysierungsgrad von 75-89 Mol% oder 96-99 Mol% darstellt.

14. Zusammensetzung nach einem der Ansprüche 1 bis 13, dadurch gekennzeichnet, dass das Alkenolpolymere ein Molekulargewicht von etwa 15'000 bis 240'000 aufweist.

15. Zusammensetzung nach einem der Ansprüche 1 bis 13, dadurch gekennzeichnet, dass das Alkenolpolymere ein Molekulargewicht von etwa 40'000 bis 110'000 aufweist.

16. Zusammensetzung nach einem der Ansprüche 1 bis 15, dadurch gekennzeichnet, dass diese ein synthetisches thermoplastisches Polymer enthält.

17. Zusammensetzung nach Anspruch 16, dadurch gekennzeichnet, dass das synthetische thermoplastische Polymere ausgewählt ist aus der Gruppe der Polyolefine, Polyvinylacetate und partiell hydrolysierte Polyvinylacetate; Polystyrol; Polyacrylsäureester; Polymethacrylsäureester; thermoplastische Polykondensate, Alkylen/Acrylsäure-Copolymere, Alkylen/Methacrylsäure-Copolymere, Alkylen/Maleinanhydrid-Copolymere; Alkylen/Vinylalkohol-Copolymere und/oder Polylactone.

18. Zusammensetzung nach Anspruch 16 oder 17, dadurch gekennzeichnet, dass das synthetische thermoplastische Polymer Polyäthylen, Polypropylen, einen Polyester, ein Polyamid; ein Äthylen/Acrylsäure-Copolymer, ein Äthylen/Vinylalkohol-Copolymer oder Polycaprolacton dastellt.

19. Zusammensetzung nach einem der Ansprüche 1 bis 18, dadurch gekennzeichnet, dass das Flammschutzmittel eine Phosphor, Schwefel oder Halogen enthaltende Verbindung oder ein Gemisch solcher Verbindungen darstellt.

20. Zusammensetzung nach einem der Ansprüche 1 bis 19, dadurch gekennzeichnet, dass diese mit einem Verfahren unter Verwendung einer Vorrichtung für Spritzgiessen, Biasformen, Extrudieren und Coextrudieren (Stab, Rohr- und Filmextrudieren) oder Pressformen verarbeitet wurde und in Form von Flaschen, Folien, Filme, Verpackungsmaterialien, Rohre, Stäbe, laminierte Filme, Säcke, Beutel, Becher, Schäume, pharmazeutische Kapseln, Granulate oder Pulver vorliegt.

21. Kerzenbecher, hergestellt aus einer Zusammensetzung nach einem der Ansprüche 1 bis 19.

22. Zusammensetzung nach einem der Ansprüche 1 bis 19, dadurch gekennzeichnet, dass diese ein verschäumbares Granulat darstellt.

## Claims

1. A biodegradable composition, characterised in that said composition comprises a starch/protein reaction product which has been obtained by reacting a starch with a protein, which has been treated at a p_{H}-value of at least 8, under corresponding deprotonation of the amino groups, and wherein said composition optionally contains one or more components selected from the group comprising alkenol polymers, fillers, lubricants, plasticizers, synthetic thermoplastic polymers, stabilizers, flame retardants, colouring agents, nucleating agents, foaming agents, pigments and mixtures thereof; wherein the weight ratio of the dry protein to the dry starch within the starch/protein reaction product is from 0.05:99.95 to 40:60.

2. A biodegradable composition according to claim 1, which is obtained by heating and melting a primary mixture and obtaining a melt thereof, characterised in that said primary mixture comprises the following components: (i) a starch with a water content of from 5% to 40% by weight; (ii) a protein, which has been treated at a p_{H}-value of at least 8, under corresponding deprotonation of the amino groups, and optionally (iii) one or more components selected from the group comprising alkenol polymers, fillers, lubricants, plasticizers, synthetic thermoplastic polymers, stabilizers, flame retardants, colouring agents, nucleating agents, foaming agents, pigments and mixtures thereof; wherein the weight ratio of the dry protein to the dry starch within the starch/protein reaction product is from 0.05:99.95 to 40:60.

3. A biodegradable composition, characterised in that said composition comprises the following components: (i) a starch with a water content from 5% to 40% by weight; (ii) a protein, which has been treated at a p_{H}-value of at least 8; under corresponding deprotonation of the amino groups, and optionally (iii) one or more components selected from the group comprising alkenol polymers, fillers, lubricants, plasticizers, synthetic thermoplastic polymers, stabilizers, flame retardants, colouring agents, nucleating agents, foaming agents, pigments and mixtures thereof; wherein the weight ratio of the dry protein to the dry starch within the starch/protein reaction product is from 0.05:99.95 to 40:60.

4. A composition according to any one of the claims 1 to 3, characterised in that said composition is present in the form of a powdery mixture, a granulate, in the form of a melt or an article made therefrom by injection moulding or extrusion.

5. A composition according to any on of the claims 1 to 4, characterised in that the protein treated under deprotonation of the amino groups of the component (ii) is gelatine of vegetal or animal origin or casein, and which has been deprotonated at least at p_{H} 10.

6. A composition according to claim 5, characterised in that the protein of the component (ii) has been deprotonated at about p_{H} 11.5.

7. A composition according to any one of the claims 1 to 6, characterised in that that the protein treated under deprotonation of the amino groups of the component (ii) is gelatine.

8. A composition according to any one of the claims 1 to 7, characterised in that the starch is of vegetable origin as derived from potatoes, wheat, corn, oats, rice or other starch containing plants.

9. A composition according to any one of the claims 1 to 8, characterised in that the starch is a starch ester, preferably starch acetate, wherein the degree of substitution is not higher than 0.05.

10. A composition according to any one of the claims 1 to 9, characterised in that the weight ratio of the dry protein to the starch within the starch/protein reaction product is from 1:99 to 20:80.

11. A composition according to any one of the claims 1 to 10, characterised in that the weight ratio of the dry protein to the starch within the starch/protein reaction product is from 1:99 to 8.5:91.5.

12. A composition according to any one of the claims 1 to 11, characterised in that the alkenol polymers of component (iii) is a partially hydrolysed polyvinyl acetate with a degree of hydrolysis of from 65 mol% to 100 mol%.

13. A composition according to any one of the claims 1 to 11, characterised in that the alkenol polymers of component (iii) is a partially hydrolysed polyvinyl acetate with a degree of hydrolysis of from 75-89 mol% or 96-99 mol%.

14. A composition according to any one of the claims 1 to 13, characterised in that the alkenol polymer has an molecular weight of about 15'000 to 240'000.

15. A composition according to any one of the claims 1 to 13, characterised in that the alkenol polymer has an molecular weight of about 40'000 to 110'000.

16. A composition according to any one of the claims 1 to 15, characterised in that said composition comprises a synthetic thermoplastic polymer.

17. A composition according to claim 16, characterised in that the synthetic thermoplastic polymer is selected from the group consisting of polyolefines, poly(vinyl acetates) or partially hydrolysed poly(vinyl acetates), polystyrenes; poly(acrylic acid) esters; poly(methacrylic acid) esters; thermoplastic polycondensates; alkylene/acrylic acid copolymers, alkylene/methacrylic acid copolymers; alkylene/maleic anhydride copolymers; alkylene/vinylalcohol copolymers and/or polylactone.

18. A composition according to claim 16 or 17, characterised in that the synthetic thermoplastic polymer is polyethylene, polypropylene, a polyester, a polyamide; an ethylene/acrylic acid copolymer, an ethylene/vinyl alcohol or polycaprolactone.

19. A composition according to any one of the claims 1 to 18, characterised in that the flame retardant is a phosphorous, sulphur or halogen containing compound or mixtures thereof.

20. A composition according to any one of the claims 1 to 19, characterised in that said composition has been processed by using an apparatus for injection moulding, blow moulding, extrusion and coextrusion (rod, pipe and film extrusion) or compression moulding and is in the form of bottles, sheets, films, packaging materials, pipes, rods, laminated films, sacks, bags, cups, foams, pharmaceutical capsules, granulates or powders.

21. Candle cups, made from a composition according to any one of the claims 1 to 19.

22. A composition according to any one of the claims 1 to 19, characterised in that said composition is in the form of a foamable granulate.

## Revendications

1. Une composition biodégradable, caractérisée en ce que la dite composition est un produit de réaction amidon/protéine, qui a été obtenu par la réaction d'un amidon avec une protéine traitée à une valeur pH d'au moins 8, sous déprotonisation correspondante des groupements aminés et en ce que cette composition contient optionnellement une ou plusieurs matières choisies dans le groupe comprenant des polymères d'alcénole, des charges, des lubrifiants, des plastifiants, des polymères thermoplastiques synthétiques, des stabilisateurs, des retardateurs d'inflammation, des colorants, des agents de nucléation, des agents de moussage, des pigments et leurs mélanges; où la proportion en poids de la protéine sèche par rapport à l'amidon sec dans le produit de réaction amidon/ protéine est comprise entre 0.05 : 99.95 et 40 : 60.

2. Une composition biodégradable selon la revendication 1, obtenue par le chauffage et la fusion d'un mélange initial en une masse fondue, caractérisée en ce que le dit mélange initial contient les constituants suivants: (i) un amidon avec une teneur en eau comprise entre 5 et 40 % en poids; (ii) une protéine traitée à une valeur pH d'au moins 8, sous déprotonisation correspondante des groupements aminés, et (iii) optionnellement une ou plusieurs matières choisies dans le groupe comprenant des alcénole-polymères, des charges, des lubrifiants, des plastifiants, des polymères thermoplastiques synthétiques, des stabilisateurs, des retardateurs d'inflammation, des colorants, des agents de nucléation, des agents de moussage, des pigments et leurs mélanges; où la proportion en poids de la protéine sèche par rapport à l'amidon sec dans le produit de réaction amidon/ protéine est comprise entre 0.05 : 99.95 et 40 : 60.

3. Une composition biodégradable, caractérisée en ce que la dite composition comprend les constituants suivants: (i) un amidon avec une teneur en eau comprise entre 5 et 40 % en poids; (ii) une protéine traitée à une valeur pH d'au moins 8, sous déprotonisation correspondante des groupements aminés, et (iii) optionnellement une ou plusieurs matières choisies dans le groupe comprenant des alcénole-polymères, des charges, des lubrifiants, des plastifiants, des polymères thermoplastiques synthétiques, des stabilisateurs, des retardateurs d'inflammation, des colorants, des agents de nucléation, des agents de moussage, des pigments et leurs mélanges; où la proportion en poids de la protéine sèche par rapport à l'amidon sec dans le produit de réaction amidon/ protéine est comprise entre 0.05 : 99.95 et 40 : 60.

4. Une composition selon l'une quelconque des revendications 1 à 3, caractérisée en ce que la composition se présente sous forme de mélange poudreux, de granulés, de masse fondue ou d'un article fabriqué par moulage par injection ou extrusion.

5. Une composition selon l'une quelconque des revendications 1 à 4, caractérisée en ce que la protéine traitée sous déprotonisation des groupements aminés du constituant (ii) est une gélatine d'origine végétale ou animale ou de la caséine, et qui était déprotonisée à une valeur pH d'au moins 10.

6. Une composition selon la revendication 5, caractérisée en ce que la protéine du constituant (ii) a été déprotonisée à une valeur pH d'environ 11.5.

7. Une composition selon l'une quelconque des revendications 1 à 6, caractérisée en ce que la protéine traitée sous déprotonisation des groupements aminés du constituant (ii) est de la gélatine.

8. Une composition selon l'une quelconque des revendications 1 à 7, caractérisée en ce que l'amidon est d'origine végétale tel qu'extrait des pommes de terre, du blé, du maïs, de l'avoine, du riz ou d'autres plantes contenant de l'amidon.

9. Une composition selon l'une quelconque des revendications 1 à 8, caractérisée en ce que l'amidon est un ester d'amidon, de préférence de l'acétate d'amidon, dans lequel le degré de substitution ne dépasse pas 0.05.

10. Une composition selon l'une quelconque des revendications 1 à 9, caractérisée en ce que la proportion en poids de la protéine sèche par rapport à l'amidon dans le produit de réaction amidon/ protéine est comprise entre 1 : 99 et 20 : 80.

11. Une composition selon l'une quelconque des revendications 1 à 10, caractérisée en ce que la proportion en poids de la protéine sèche par rapport à l'amidon dans le produit de réaction amidon/ protéine est comprise entre 1: 99 et 8.5 : 91.5.

12. Une composition selon l'une quelconque des revendications 1 à 11, caractérisée en ce que le polymère d'alcénole du constituant (iii) est un poly(vinylacétate) partiellement hydrolysé avec un degré d'hydrolysation de 65 à 100 Mol%.

13. Une composition selon l'une quelconque des revendications 1 à 11, caractérisée en ce que le polymère d'alcénole du constituant (iii) est un poly(vinylacétate) partiellement hydrolysé avec un degré d'hydrolysation de 75 à 89 Mol% ou de 96 à 99 Mol%.

14. Une composition selon l'une quelconque des revendications 1 à 13, caractérisée en ce que le polymère d'alcénole a un poids moléculaire d'environ 15000 à 240000.

15. Une composition selon l'une quelconque des revendications 1 à 13, caractérisée en ce que le polymère d'alcénole a un poids moléculaire d'environ 40000 à 110000.

16. Une composition selon l'une quelconque des revendications 1 à 15, caractérisée en ce que la dite composition contient un polymère thermoplastique synthétique.

17. Une composition selon la revendication 16, caractérisée en ce que le polymère thermoplastique synthétique est choisi dans le groupe comprenant les polyoléfines, poly(vinylacétates) ou poly(vinylacétates) partiellement hydrolysé; polystyrène; poly(esters d'acide acrylique); poly(esters d'acide méthacrylique); polycondensats thermoplastiques; alcoylène/ acide acrylique copolymères, alcoylène/ acide méthacrylique copolymères; alcoylène/ anhydride maléique copolymères; alcoylène/ alcool vinylique copolymères et/ ou polylactone.

18. Une composition selon la revendication 16 ou 17, caractérisée en ce que le polymère thermoplastique synthétique est du polyéthylène, polypropylène, un polyester, un polyamide; un éthylène/ acide acrylique copolymère, un éthylène/ alcool vinylique copolymère ou polycaprolactone.

19. La composition selon l'une quelconque des revendications 1 à 18, caractérisée en ce que le retardateur d'inflammation est un composé contenant du phosphore, du soufre ou de l'halogène ou un mélange de tels composés.

20. La composition selon l'une quelconque des revendications 1 à 19, caractérisée en ce que la composition est traitée par un procédé en utilisant un appareil pour le moulage par injection, moulage par soufflage, extrusion et coextrusion (extrusion de baguette, tige et film) ou moulage par compression et est sous forme de bouteilles, de feuilles, de films, de matières d'emballage, de tubes, de tiges, de films laminés, de sacs, de sachets, de godets, de mousses, de capsules pharmaceutiques, de granulés ou de poudres.

21. Des godets de bougies, fabriqués à partir d'une composition selon l'une quelconque des revendications 1 à 19.

22. Une composition selon l'une quelconque des revendications 1 à 19, caractérisée en ce que la composition est sous forme de granulés qui peuvent être moussées.
